# EUROPEAN PATENT APPLICATION

(11) **EP 4 477 087 A1**
(43) Date of publication of application: **18.12.2024**
(21) Application number: 23179062.7
(22) Date of filing: 13.06.2023
(51) Int. Cl.: A23F 3/16, A23F 3/40, A23F 3/14

(54) **A FLAVOURED TEA PRODUCT**

(71) Applicant: Ekaterra Research and Development UK Limited, Sharnbrook, Bedfordshire MK44 1LQ (GB)
(72) Inventor: AHMED, Syed Irfan, Bedford, MK44 1LQ (GB); NINGRUM, Alien, Bedford, MK44 1LQ (GB)
(74) Representative: Mewburn Ellis LLP

(57) **Abstract**

The present invention relates to a flavoured tea product and a process for preparing the same. More particularly, the present invention relates to a flavoured black tea product and a process for preparing the same.

## Description

### Field of the invention

The present invention relates to a flavoured tea product and a process for preparing the same. More particularly the present invention relates to a flavoured black tea product and a process for preparing the same.

### Background of the invention

Staying hydrated is believed to bring about many health benefits to both the body and mind. Thus, it is often said that many non-alcoholic beverages are believed to refresh the mind. There are many non-alcoholic beverages available in the market for consumption. Tea and coffee are the most popular out of these.

Polyphenols that are present in tea are also considered to be good for human health. There are several varieties of teas available in the market, e.g. black tea, green tea, oolong tea, white tea, etc. Black tea is generally prepared by a process which includes the steps of withering, macerating, fermenting, and firing/drying. On the other hand, green tea manufacturing process does not include the step of fermentation.

Often, people want to enjoy the many health benefits associated with drinking tea, but they are not fond of the natural aroma and flavour of tea in its original form. Thus, flavoured tea products are becoming increasingly popular options for many consumers. There are a variety of flavoured teas on the market, with fruit and floral flavourings being the most popular.

Increasingly, consumers are seeking flavoured tea products with subtle and well-balanced flavour and aroma profiles that can deliver all the health benefits associated with tea but with flavourings that do not overpower or over enrich people's senses.

Thus, while numerous flavoured teas currently exist on the market, there remains a need for new flavoured tea products with unique and well-balanced flavour profiles, particularly flavoured tea products with novel and well-balanced profiles of fruity (e.g. citrusy) and floral notes.

Conventionally, flavoured tea is prepared by adding liquid flavourings, or alternatively granular flavourings, to a tea product before the tea and added flavourings are mixed together. Following extensive research, the inventors surprisingly and beneficially discovered that flavoured tea prepared by mixing a tea product with both granular flavourings and separately liquid flavourings resulted in a flavoured tea product with a unique, novel and well-balanced aroma and flavoured profile, and a novel chemical composition.

### Summary of the drawings

Figure 1 shows a schematic representation of the results from the a panel of trained tea tasters for the flavoured tea products exemplified hereinbelow: Example 1 (Hybrid 1), Example 2 (Hybrid 2), Comparative Example 1 (Granular) and Comparative Example 2 (Liquid).
Figure 2 shows a schematic representation of the results from the a panel of trained tea tasters for the flavoured tea products exemplified hereinbelow: Example 1 (New EG), Control 1 (Current EG) and Control 2 (Twinnings EG).

### Summary of the invention

In a first aspect, the present invention provides a process for preparing a flavoured tea product, the process comprising:
providing a tea product; and
mixing the tea product with one or more granular flavourings and one or more liquid flavourings.

In another aspect of the invention, there is provided a flavoured tea product comprising D-limonene and linalool, wherein the ratio of D-limonene to linalool is between 1:1.2 and 1:2.8.

These and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

The disclosure of the invention as found herein will be understood to cover all embodiments as found in the claims and as discussed hereinbelow.

The present invention provides a process for preparing a flavoured tea product, the process comprising:
providing a tea product; and
mixing the tea product with one or more granular flavourings and one or more liquid flavourings.

### Tea Product

For the purpose of the present invention, "tea product" means material from *Camellia sinensis* var. *sinensis* and/or *Camellia sinensis* var. *assamica.*

In certain embodiments, the composition of the present invention comprises a leaf tea product. A leaf tea product preferably means a tea product which is obtained after the tea manufacturing processes and comprise less than 10%, preferably less than 7% and most preferably less than 5% moisture by weight of the leaf tea product.

The term "leaf tea" refers to leaf and/or stem material from the tea plant in an uninfused form (i.e. material which has not been subjected to a solvent extraction step). Leaf tea is dried to a moisture content of less than 5 wt.%, and the moisture content of the leaf tea will not usually be below 0.1 wt.%. Typically, the leaf tea has a moisture content of 1 to 5 wt.%. In other words, the term "leaf tea" refers to the end product of tea manufacture (sometimes referred to as "made tea").

The leaf tea product may preferably be selected from a black tea product, a green tea product, an oolong tea product, a white tea product or blends thereof.

As used herein, the term "black tea" refers to substantially fermented tea, wherein "fermentation" refers to the oxidative and hydrolytic process that tea undergoes when certain endogenous enzymes and substrates are brought together. During the so-called fermentation process, colourless catechins in the leaves and/or stem are converted to a complex mixture of yellow/orange to dark brown polyphenolic substances. For example, black leaf tea can be manufactured from fresh tea material by the steps of: withering, maceration, fermentation and drying. A more detailed description of the production of black tea can be found in Chapter 14 of "Tea: Cultivation to consumption" (edited by K.C. Wilson & M.N. Clifford, published in 1992).

The starting material for the process of the present invention is preferably black leaf tea. Black leaf tea is a readily available commercial product which can be purchased in bulk at tea auctions. In other words, the term "black leaf tea" refers to the end product of black tea manufacture (sometimes referred to as "made tea"). The black leaf tea provided as the starting material for the claimed process has a moisture content of less than 5 wt.%, preferably less than 4.5 wt.%, more preferably less than 4 wt.%. The moisture content of this black leaf tea is usually at least 0.1 wt.%, more usually at least 0.5 wt.%. Typically, the black leaf tea will have a moisture content of 1 to 5 wt.%.

Green tea refers to substantially unfermented tea. Green tea has different characteristics than black tea. Green tea liquor is light in colour unlike black tea. Green tea also enriched with catechins and low or no amount of theaflavins.

Oolong tea refers to semi-fermented tea.

The preferred leaf tea product for the purpose of the present invention is either black tea or green tea, the most preferred is black tea.

In certain preferred embodiments, the tea product (e.g. leaf tea product) is a blended black tea product. That is, the tea product (e.g. leaf tea product) is a black tea product made from the blending together of several black tea leaves.

The amount of tea product (e.g. leaf tea product) used in the process of the invention is preferably in the range of 75 to 99%, more preferably 80 to 99%, even more preferably 85 to 98.5%, yet more preferably 90 to 98.5%, still more preferably 92 to 98.5% and most preferably 94 to 98.5% by weight of the total composition.

In certain preferred embodiments, the tea product (e.g. leaf tea product) is a blended black tea product with a blend density of at least 108cc / 50 mL.

In some preferred embodiments, the tea product (e.g. leaf tea product) is a blended black tea product with a dust content of 250 microns of less than 20%, and most preferably less than 15%.

### Flavoured tea product

It will be appreciated that the flavoured tea product of the invention may be any tea product, as defined herein above, that is flavoured with one or more flavouring agents. The flavouring agents may be any of those described hereinbelow.

In certain preferred embodiments, the flavoured tea product is a flavoured black tea product. Non-limiting examples of flavoured black tea products include Earl Grey, Lady Grey, lemon flavoured black tea, orange flavoured black tea, rose flavoured black tea, blackcurrant flavoured black tea, mint flavoured tea, cardamom flavoured black tea, masala flavoured black tea, vanilla flavoured black tea, passion fruit flavoured black tea, forest fruits flavoured black tea, ginger flavoured black tea and the like.

Preferably the flavoured tea product is a black tea product flavoured with bergamot, such as Earl Grey or Lady Grey, and most preferably Earl Grey.

### Mixing the tea product with one or more flavourings

The process of the invention comprises the step of mixing the tea product with one or more liquid flavourings and separately one or more granular flavourings.

It will be understood that the tea product may be mixed firstly with the one or more liquid flavourings and then separately mixed with the one or more granular flavourings, or vice vera.

Preferably, at least one of the liquid flavourings and at least one or the granular flavourings are the same type of flavouring. For example, both the liquid and granular flavourings may comprise a bergamot flavouring. That is, for example, at least one of the liquid flavourings is a bergamot flavouring and at least one of the of the granular flavourings is a bergamot flavouring.

It will be appreciated that the one or more liquid flavourings may be any flavouring agent (flavouring compound) in a liquid format. Non-limiting examples include oils, solutions and suspensions of flavouring in a particular solvent (e.g. water). In certain embodiments, the one or more liquid flavourings are oils.

Preferably, the liquid flavouring is selected from bergamot, rose, mint, lemon, orange, jasmine, chamomile, cardamom, masala, ginger, strawberry, apple, blackcurrant, plum, fennel, lemon verbena, lavender, passion fruit, forest fruits and vanilla in liquid form (e.g. as an oil). More preferably, the liquid flavouring is selected from bergamot, lemon, orange, apple and lemon verbena in liquid form (e.g. as an oil). Most preferably, the liquid flavouring is bergamot in liquid form (e.g. bergamot oil).

It will also be understood that the one or more granular flavourings may be any flavouring agent (flavouring compound) in granule or powdered form.

Preferably, the one or more granular flavourings have an average (mean) particle size of less than 1000 µm, more preferably the one or more granular flavourings have an average (mean) particle size of less than 800 µm, still more preferably the one or more granular flavourings have an average (mean) particle size of less than 750 µm, even more preferably the one or more granular flavourings have an average (mean) particle size of less than 500 µm, yet more preferably the one or more granular flavourings have an average (mean) particle size of less than 25 µm, most preferably the one or more granular flavourings have an average (mean) particle size of less than 200 µm.

In certain embodiments, the one or more granular flavourings have an average (mean) particle size of between 50 µm and 1000 µm, preferably between 50 µm and 500 µm, even more preferably between 50 µm and 250 µm, and most preferably between 100 µm and 250 µm.

Preferably, the granular flavouring is selected from bergamot, rose, mint, lemon, orange, jasmine, chamomile, cardamom, masala, ginger, strawberry, apple, blackcurrant, plum, fennel, lemon verbena, lavender, passion fruit, forest fruits and vanilla in a granular or powdered form, as defined above. More preferably, the granular flavouring is selected from bergamot, lemon, orange, apple and lemon verbena in a granular or powdered form, as defined above. Most preferably, the granular flavouring is granular or powdered bergamot.

In certain embodiments, at least one of the granular flavourings and at least one of the liquid flavourings is bergamot (e.g. bergamot granules and bergamot oil).

In some preferred embodiments, the granular flavourings and the liquid flavourings are exclusively bergamot flavourings.

In certain preferred embodiments, after mixing with one or more liquid flavourings, the tea product is left to stand for between 2 and 72 hours at a temperature of between 10 °C and 45°C. Preferably, the tea product is left to stand for between 2 and 48 hours at a temperature of between 10 °C and 40°C. More preferably, the tea product is left to stand for between 4 and 36 hours at a temperature of between 15°C and 35°C. Yet more preferably, the tea product is left to stand for between 6 and 36 hours at a temperature of between 18 °C and 30°C. Still more preferably, the tea product is left to stand for between 6 and 30 hours at a temperature of between 20 °C and 30°C. Even more preferably, the tea product is left to stand for between 6 and 28 hours at a temperature of between 20 °C and 28°C. Most preferably, the tea product is left to stand for between 12 and 26 hours at a temperature of between 20 °C and 25°C.

In some embodiments, after mixing with one or more liquid flavourings, the tea product is left to stand for at least 2 hours at a temperature of between 10 °C and 45°C. Preferably, the tea product is left to stand for at least 4 hours at a temperature of between 10 °C and 45°C. More preferably, the tea product is left to stand for at least 6 hours at a temperature of between 15 °C and 40°C. Still more preferably, the tea product is left to stand for at least 8 hours at a temperature of between 20 °C and 35°C. Yet more preferably, the tea product is left to stand for at least 12 hours at a temperature of between 20 °C and 28°C. Most preferably, the tea product is left to stand for at least 20 hours at a temperature of between 20 °C and 25°C.

During the step of leaving the tea product to stand after mixing with one or more liquid flavourings, the relative humidity is preferably between 20 and 80%, more preferably between 20% and 70%, even more preferbaly between 30% and 60%, and most preferably between 40% and 60%.

It will be appreciated that relative humidity refers to a ratio, expressed in percent, of the amount of atmospheric moisture present relative to the amount that would be present if the air were saturated. Relative humidity is a known and well-established term of the art.

In certain embodiments, the amount of granular flavouring added during the process of the invention is between 1 and 15 % based on the weight of the tea product. Preferably, the amount of granular flavouring added during the process of the invention is between 1 and 10 % based on the weight of the tea product. Even more preferably, the amount of granular flavouring added during the process of the invention is between 1 and 8 % based on the weight of the tea product. Yet more preferably, the amount of granular flavouring added during the process of the invention is between 2 and 8 % based on the weight of the tea product. Most preferably, the amount of granular flavouring added during the process of the invention is between 3 and 6 % based on the weight of the tea product.

In certain embodiments, the amount of liquid flavouring added during the process of the invention is between 0.1 and 10 % based on the weight of the tea product. Preferably, the amount of liquid flavouring added during the process of the invention is between 0.1 and 5 % based on the weight of the tea product. Even more preferably, the amount of liquid flavouring added during the process of the invention is between 0.1 and 3 % based on the weight of the tea product. Yet more preferably, the amount of liquid flavouring added during the process of the invention is between 0.1 and 1 % based on the weight of the tea product. Most preferably, the amount of liquid flavouring added during the process of the invention is between 0.2 and 0.6 % based on the weight of the tea product.

In certain preferred embodiments, the total amount of granular flavouring and liquid flavouring is between 1 and 25 % based on the weight of the tea product. More preferably, the total amount of granular flavouring and liquid flavouring is between 1 and 15 % based on the weight of the tea product. Even more preferably, the total amount of granular flavouring and liquid flavouring is between 1 and 10 % based on the weight of the tea product. Still more preferably, the total amount of granular flavouring and liquid flavouring is between 2 and 8 % based on the weight of the tea product. Yet more preferably, the total amount of granular flavouring and liquid flavouring is between 4 and 8 % based on the weight of the tea product. Most preferably, the total amount of granular flavouring and liquid flavouring is between 4 and 6 % based on the weight of the tea product.

Preferably, the ratio of liquid flavouring to granular flavouring added to the tea product is between 1:1 and 1:25, more preferably between 1:1 and 1:20, even more preferably between 1:2 and 1:15, still more preferably between 1:3 and 1:15, yet more preferably between 1:5 and 1:15, and most preferably between 1:10 and 1:15.

It will be appreciated that the tea product may be mixed with the one or more liquid flavourings and separately one or more granular flavourings using any suitable method of mixing, such as mechanical stirring or agitation. Preferably, the mixing is achieved using a rotary mixer equipped with liquid dosing capabilities.

It will also be appreciated that both addition and mixing may be conducted at any suitable temperature. Preferably, the temperature of addition and mixing is between 10 °C and 50 °C, more preferably between 15 °C and 40 °C and most preferably between 20 °C and 30 °C (e.g. 24-27 °C).

It will also be appreciated that both addition and mixing may be conducted at any suitable humidity. Preferably, the relative humidity of addition and mixing is between 20% and 80%, more preferably between 30% and 70% and most preferably between 40% and 60% (e.g. 45-55%).

Any suitable duration of mixing may be used. Preferably, the duration of the mixing is varied between 1 and 30 minutes. Preferably, the mixing of step b) is conducted for a duration of between 2 and 30 minutes, more preferably between 5 and 25 minutes, even more preferably between 5 and 20 minutes and most preferably between 5 and 10 minutes.

In certain preferred embodiments, the one or more liquid flavourings are sprayed onto the tea product before or during the mixing step.

It will also be appreciated that one or more other ingredient (e.g. one or more nutrients or vitamins, pH regulating agent, sweeteners etc.), may also be added during the mixing step.

### Certain Preferred Embodiments

The following numbered paragraphs represent certain preferred embodiments of the process of the invention:
1.1) In certain embodiments, there is provided a process for preparing a flavoured tea product, the process comprising:
   a) providing a tea product;
   b) mixing the tea product with one or more granular flavourings and one or more liquid flavourings; and
   c) leaving the tea product to stand for between 2 and 48 hours at a temperature of between 10 °C and 45°C after mixing with the one or more liquid flavourings,
   wherein at least one of the liquid flavourings and at least one or the granular flavourings are the same type of flavouring (e.g. bergamot).
1.2) In certain embodiments, there is provided a process for preparing a flavoured tea product, the process comprising:
   a) providing a tea product;
   b) mixing the tea product with one or more granular flavourings and one or more liquid flavourings; and
   c) leaving the tea product to stand for between 2 and 48 hours at a temperature of between 10 °C and 45°C after mixing with the one or more liquid flavourings,
   wherein:
   i) at least one of the liquid flavourings and at least one or the granular flavourings are the same type of flavouring (e.g. bergamot); and
   ii) the total amount of granular flavouring and liquid flavouring is between 1 and 25 % based on the weight of the tea product.
1.3) In certain embodiments, there is provided a process for preparing a flavoured tea product, the process comprising:
   a) providing a tea product;
   b) mixing the tea product with one or more granular flavourings and one or more liquid flavourings; and
   c) leaving the tea product to stand for between 2 and 48 hours at a temperature of between 10 °C and 45°C after mixing with the one or more liquid flavourings,
   wherein:
   i) at least one of the liquid flavourings and at least one or the granular flavourings are the same type of flavouring (e.g. bergamot);
   ii) the total amount of granular flavouring and liquid flavouring is between 1 and 25 % based on the weight of the tea product; and
   iii) the ratio of liquid flavouring to granular flavouring added to the tea product is between 1:3 and 1:15.
1.4) In certain embodiments, there is provided a process for preparing a flavoured tea product, the process comprising:
   a) providing a tea product;
   b) mixing the tea product with one or more granular flavourings and one or more liquid flavourings; and
   c) leaving the tea product to stand for between 2 and 48 hours at a temperature of between 10 °C and 45°C after mixing with the one or more liquid flavourings,
   wherein:
   i) at least one of the liquid flavourings and at least one or the granular flavourings are the same type of flavouring (e.g. bergamot);
   ii) the total amount of granular flavouring and liquid flavouring is between 1 and 25 % based on the weight of the tea product;
   iii) the ratio of liquid flavouring to granular flavouring added to the tea product is between 1:3 and 1:15; and
   iv) the liquid flavourings and the granular flavourings are independently selected from bergamot, rose, mint, lemon, orange, jasmine, chamomile, ginger, strawberry, apple, blackcurrant, plum, fennel, lemon verbena, lavender and vanilla (and preferably the liquid flavourings and the granular flavourings are both bergamot flavouring).
1.5) In certain embodiments, there is provided a process for preparing a flavoured tea product, the process comprising:
   a) providing a tea product;
   b) mixing the tea product with one or more liquid flavourings;
   c) leaving the tea product of step b) to stand for between 2 and 48 hours at a temperature of between 10 °C and 45°C; and
   d) mixing the tea product of step c) with one or more granular flavourings.
1.6) In other embodiments, there is provided a process for preparing a flavoured tea product, the process comprising:
   a) providing a tea product;
   b) mixing the tea product with one or more liquid flavourings;
   c) leaving the tea product of step b) to stand for between 2 and 48 hours at a temperature of between 10 °C and 45°C; and
   d) mixing the tea product of step c) with one or more granular flavourings,
   wherein at least one of the liquid flavourings and at least one or the granular flavourings are the same type of flavouring (e.g. bergamot).
1.7) In other embodiments, there is provided a process for preparing a flavoured tea product, the process comprising:
   a) providing a tea product (e.g. a black tea product);
   b) mixing the tea product (e.g. a black tea product) with one or more liquid flavourings;
   c) leaving the tea product (e.g. a black tea product) of step b) to stand for between 2 and 48 hours at a temperature of between 10 °C and 45°C; and
   d) mixing the tea product of step c) with one or more granular flavourings,
   wherein:
   i) at least one of the liquid flavourings and at least one or the granular flavourings are the same type of flavouring (e.g. bergamot); and
   ii) the total amount of granular flavouring and liquid flavouring is between 1 and 25 % based on the weight of the tea product.
1.8) In other embodiments, there is provided a process for preparing a flavoured tea product, the process comprising:
   a) providing a tea product (e.g. a black tea product);
   b) mixing the tea product (e.g. a black tea product) with one or more liquid flavourings;
   c) leaving the tea product (e.g. a black tea product) of step b) to stand for between 2 and 48 hours at a temperature of between 10 °C and 45°C; and
   d) mixing the tea product of step c) with one or more granular flavourings,
   wherein:
   i) at least one of the liquid flavourings and at least one or the granular flavourings are the same type of flavouring (e.g. bergamot);
   ii) the total amount of granular flavouring and liquid flavouring is between 1 and 25 % based on the weight of the tea product; and
   iii) the ratio of liquid flavouring to granular flavouring added to the tea product is between 1:3 and 1:15.
1.9) In other embodiments, there is provided a process for preparing a flavoured tea product, the process comprising:
   a) providing a tea product (e.g. a black tea product);
   b) mixing the tea product (e.g. a black tea product) with one or more liquid flavourings;
   c) leaving the tea product (e.g. a black tea product) of step b) to stand for between 2 and 48 hours at a temperature of between 10 °C and 45°C; and
   d) mixing the tea product of step c) with one or more granular flavourings,
   wherein:
   i) at least one of the liquid flavourings and at least one or the granular flavourings are the same type of flavouring (e.g. bergamot);
   ii) the total amount of granular flavouring and liquid flavouring is between 1 and 25 % based on the weight of the tea product;
   iii) the ratio of liquid flavouring to granular flavouring added to the tea product is between 1:3 and 1:15; and
   iv) the liquid flavourings and the granular flavourings are independently selected from bergamot, rose, mint, lemon, orange, jasmine, chamomile, ginger, strawberry, apple, blackcurrant, plum, fennel, lemon verbena, lavender and vanilla (and preferably the liquid flavourings and the granular flavourings are both bergamot flavouring).
1.10) In other embodiments, there is provided a process for preparing a flavoured tea product (e.g. a bergamot flavoured tea product), the process comprising:
   a) providing a tea product (e.g. a black tea product);
   b) mixing the tea product (e.g. a black tea product) with one or more liquid flavourings;
   c) leaving the tea product (e.g. a black tea product) of step b) to stand for between between 6 and 30 hours at a temperature of between 20 °C and 35°C; and
   d) mixing the tea product of step c) with one or more granular flavourings,
   wherein:
   i) at least one of the liquid flavourings is bergamot and at least one or the granular flavourings is bergamot;
   ii) the total amount of granular flavouring and liquid flavouring is between 1 and 10 % (e.g. between 4 and 6%) based on the weight of the tea product; and
   iii) the ratio of liquid flavouring to granular flavouring added to the tea product is between 1:3 and 1:15 (e.g. between 1:10 and 1:15).

### Tea Product

In another aspect of the invention, there is provided a flavoured tea product comprising D-limonene and linalool, wherein the ratio of D-limonene to linalool is between 1:1.2 and 1:2.8.

In a further aspect of the invention, there is provided a flavoured tea product comprising D-limonene, linalool, geranyl propionate and linalyl 3-methylbutanoate, wherein the flavoured tea product comprises at least one (e.g. at least 2, or at least 3, or at least 4 or all 5) of the following ratios:
a ratio of D-limonene to linalool of between 1:1.2 and 1:2.8;
a ratio of geranyl propionate to linalool of between 1:1.8 and 1:2.8;
a ratio of geranyl propionate to D-limonene of between 1:1 and 1:2;
a ratio of limonene to linalyl 3-methylbutanoate of between 1:1 and 1:2; and/or
a ratio of linalyl 3-methylbutanoate to linalool of between 1:1 and 1:1.6.

Preferably, the ratio of D-limonene to linalool is between 1:1.3 and 1:2.5, more preferably between 1:1.5 and 1:2.2, yet more preferably between 1:1.5 and 1:2.0, and most preferably between 1:1.6 and 1:1.8.

Preferably, the ratio of geranyl propionate to linalool of between 1:2.2 and 1:2.8, and most preferably between 1:2.3 and 1:2.5.

Preferably, the ratio of geranyl propionate to D-limonene of between 1:1.2 and 1:1.8, and most preferably between 1:1.3 and 1:1.5.

Preferably, the ratio of limonene to linalyl 3-methylbutanoate of between 1:1 and 1:1.5, and most preferably 1:1.1 and 1:1.4.

Preferably, the ratio of linalyl 3-methylbutanoate to linalool of between 1:1.1 and 1:1.5, and most preferably 1:1.1 and 1:1.3.

In some embodiments, the flavoured tea product tea product is flavoured with one or more flavourings selected from bergamot, rose, mint, lemon, orange, jasmine, chamomile, ginger, strawberry, apple, blackcurrant, plum, fennel, lemon verbena, lavender and vanilla. More preferably, the the flavoured tea product tea product is flavoured with one or more flavourings selected from bergamot or citrus (e.g. lemon or orange).

In certain embodiments, the flavoured tea product tea product is flavoured with bergamot and optionally one or more additional flavourings selected from rose, mint, lemon, orange, jasmine, chamomile, ginger, strawberry, apple, blackcurrant, plum, fennel, lemon verbena, lavender and vanilla.

In certain preferred embodiments, the flavoured tea product tea product is flavoured with bergamot. Most preferably, the flavoured tea product tea product is a black (leaf) tea product flavoured with bergamot.

Bergamot (citrus bergamia) is a type of citrus fruit native to Italy.

Bergamot is commonly used to flavour Earl Grey and Lady Grey products. Thus, in certain preferred embodiments, the flavoured tea product tea product is and Earl Grey or Lady Grey tea product.

In certain embodiments, the flavoured tea product comprises D-limonene, linalool, geranyl propionate and linalyl 3-methylbutanoate, and D-limonene represents between 15% and 30% of the total combined amount of these four compounds in the flavoured tea product. Preferably, the flavoured tea product comprises D-limonene, linalool, geranyl propionate and linalyl 3-methylbutanoate, and D-limonene represents between 18% and 28% of the total combined amount of these four compounds in the flavoured tea product. More preferably, the flavoured tea product comprises D-limonene, linalool, geranyl propionate and linalyl 3-methylbutanoate, and D-limonene represents between 20% and 25% of the total combined amount of these four compounds in the flavoured tea product. Most preferably, the flavoured tea product comprises D-limonene, linalool, geranyl propionate and linalyl 3-methylbutanoate, and D-limonene represents between 20% and 23% of the total combined amount of these four compounds in the flavoured tea product.

In certain embodiments, the flavoured tea product comprises D-limonene, linalool, geranyl propionate and linalyl 3-methylbutanoate, and linalool represents between 32% and 38% of the total combined amount of these four compounds in the flavoured tea product. Preferably, the flavoured tea product comprises D-limonene, linalool, geranyl propionate and linalyl 3-methylbutanoate, and linalool represents between 33% and 37% of the total combined amount of these four compounds in the flavoured tea product. Most preferably, the flavoured tea product comprises D-limonene, linalool, geranyl propionate and linalyl 3-methylbutanoate, and linalool represents between 34% and 36% of the total combined amount of these four compounds in the flavoured tea product.

In certain embodiments, the flavoured tea product comprises (-)-β-Pinene, β-Myrcene, D-Limonene, γ-Terpinen, β-Ocimene, β-Cymene, α-Terpinolene, α-Terpineol, linalool/Linalool acetate, Geranyl propionate and Linalyl 3-methylbutanoate, and linalool, Geranyl propionate and Linalyl 3-methylbutanoate represent between 55 and 70% (preferably between 60 and 65%) of the total combined amount of these compounds in the flavoured tea product.

In certain embodiments, the flavoured tea product comprises each of the following compounds in the amounts given, wherein the percentages are based on the total amount of these 11 compounds present in the flavoured tea product:

| | |
|---|---|
| (-)-β-Pinene | 0.5 to 2.5% |
| β-Myrcene | 2.8 to 4% |
| D-Limonene | 12 to 30% |
| γ-Terpinen | 1.2 to 6.2% |
| β-Ocimene | 2.8 to 4 % |
| β-Cymene | 2.8 to 4.5 % |
| α-Terpinolene | 2.2 to 2.8 % |
| α-Terpineol | 3.2 to 4.8% |
| linalool/Linalool acetate | 24.5 to 29.5% |
| Geranyl propionate | 10 to 15% |
| Linalyl 3-methylbutanoate | 16 to 26% |

In certain embodiments, the flavoured tea product comprises each of the following compounds in the amounts given, wherein the percentages are based on the total amount of these 11 compounds present in the flavoured tea product:

| | |
|---|---|
| (-)-β-Pinene | 0.5 to 1.5% |
| β-Myrcene | 2.8 to 3.5% |
| D-Limonene | 15 to 25% |
| γ-Terpinen | 1.2 to 3.5% |
| β-Ocimene | 2.8 to 3.8 % |
| β-Cymene | 3.2 to 4.2 % |
| α-Terpinolene | 2.3 to 2.8 % |
| α-Terpineol | 3.8 to 4.8% |
| linalool/Linalool acetate | 27.5 to 29.5% |
| Geranyl propionate | 10 to 13% |
| Linalyl 3-methylbutanoate | 20 to 26% |

In certain embodiments, the flavoured tea product comprises (-)-β-Pinene, β-Myrcene, D-Limonene, γ-Terpinen, β-Ocimene, β-Cymene, α-Terpinolene, α-Terpineol, linalool/Linalool acetate, Geranyl propionate and Linalyl 3-methylbutanoate, and the relative amounts of these compounds are as defined in Table 3 hereinbelow.

It will be appreciated that the abovementioned ratios and amounts are those calculated from GC-MS analysis of an infusion sample of the flavoured tea. Where the infusion is prepared as described hereinbelow and the GC-MS is run as described hereinbelow.

### EXAMPLES

### Materials used

Granular bergamot flavouring was obtained from Firmenich.

Liquid bergamot flavouring was obtained from Firmenich.

Base black tea blend is a Kenyan origin black tea blend.

Current Earl grey = commercially available Lipton's Earl Grey, Batch No. 22110

Twinnings Earl Grey = commercially available Twinning's Earl Grey, LOT No. 0000652737-136

### Example 1 - Hybrid 1 - liquid following by granule flavour profiling

A black tea base blend (400g) was loaded into a rotary mixing drum (500 litres) for blending. The drum has liquid dosing capability (a liquid flavouring tank) for homogenous mixing and absorption of liquid flavour on the black tea base blend.

The temperature of the loaded rotary mixing drum was recorded as 26°C, with a relative humidity of 50%.

Next, liquid flavouring (bergamot, 1.6 litres) was also loaded into flavour tank.

The blending drum was then set to rotate on a fixed time of 7 minutes with approximately 42 cycles, and the liquid flavour was periodically sprayed onto the black tea base blend for an initial 3 minutes to ensure even spreading of liquid flavour across black tea base blend. Blending and mixing via rotation was then continued for an additional 4 minutes.

Rotation of the rotary mixing drum was then stopped, and the blended tea was emptied from the mixing drum and loaded into storage bags. The filled storage bags were then allowed to stand for 24 hours at a temperature of between 24 °C and 28 °C to allow the liquid flavour to absorb into black tea base blend (i.e. cure).

After a (curing) period of 24 hours, the blended tea was again loaded into the mixing drum. Granular flavouring (bergamot, 18.8 g) was then also loaded into the mixing drum.

The tea and granular flavouring was then further rotated (and thus mixed) for 5 minutes with approximately 30 cycles.

The tea was then removed from the mixing drum and loaded into machine hoppers for packing.

The prepared blend was then packed into double chamber tea bags at 1.5 gr/tb weight.

### Example 2 - Hybrid 2 - granule following by liquid flavour profiling

A black tea base blend (400 g) was loaded into a rotary mixing drum (500 litres) for blending. The drum has liquid dosing capability (a liquid flavouring tank) for homogenous mixing and absorption of liquid flavour on the base black tea blend.

The temperature of the loaded rotary mixing drum was recorded as 26°C, with a relative humidity of 50%.

Next, granular flavouring (bergamot, 20 g) was also loaded into the mixing drum. The tea and granular flavouring were then rotated (and thus mixed) for 3 minutes with approximately 18 cycles.

Next, liquid flavouring (bergamot, 4 litres) was also loaded into flavour tank.

The blending drum was then set to rotate on a fixed time of 7 minutes with approximately 42 cycles, and the liquid flavour was periodically sprayed onto the black tea base blend for an initial 3 minutes to ensure even spreading of liquid flavour across black tea base blend. Blending and mixing via rotation was then continued for an additional 4 minutes.

Rotation of the rotary mixing drum was then stopped and the blended tea was emptied from the mixing drum and loaded into storage bags. The filled storage bags were then allowed to stand for 8 hours at a temperature of between 24 °C and 28 °C to allow the liquid flavour to absorb into base blend (cure).

After a curing period of 8 hours, the blended tea was removed from the mixing drum and loaded to machine hoppers for packing.

The prepared blend is then packed into Double chamber tea bags at 1.5 gr/tb weight.

### Comparative Example 1 -granule only flavour profiling

A black tea base blend (400 g) was loaded into a rotary mixing drum (500 litres) for blending.

The temperature of the loaded rotary mixing drum was recorded as 26°C, with a relative humidity of 50%.

Next, granular flavouring (bergamot, 28.4 g) was also loaded into the mixing drum. The tea and granular flavouring were then rotated (and thus mixed) for 2.5 minutes with approximately 15 cycles.

Rotation of the rotary mixing drum was then stopped and further granular flavouring (bergamot, XX g) was loaded into the mixing drum. The tea and granular flavouring were then further rotated (and thus mixed) for another 2.5 minutes with approximately 15 cycles.

Rotation of the rotary mixing drum was then stopped and the blended tea was emptied from the mixing drum and loaded to machine hoppers for packing.

The prepared blend is then packed into Double chamber tea bags at 1.5 gr/tb weight.

### Comparative Example 2 - liquid only flavour profiling

A black tea base blend (400 g) was loaded into a rotary mixing drum (500 litres) for blending. The drum has liquid dosing capability (a liquid flavouring tank) for homogenous mixing and absorption of liquid flavour on the black tea base blend.

The temperature of the loaded rotary mixing drum was recorded as 26°C, with a relative humidity of 50%.

Next, liquid flavouring (bergamot, 20 litres) was also loaded into flavour tank.

The blending drum was then set to rotate on a fixed time of 7 minutes with approximately 42 cycles, and the liquid flavour was periodically sprayed onto the black tea base blend for an initial 3 minutes to ensure even spreading of liquid flavour across black tea base blend. Blending and mixing via rotation was then continued for an additional 4 minutes.

Rotation of the rotary mixing drum was then stopped, and the blended tea was emptied from the mixing drum and loaded into storage bags. The filled storage bags were then allowed to stand for 24 hours at a temperature of between 24 °C and 28 °C to allow the liquid flavour to absorb into black tea base blend (i.e. cure).

After a (curing) period of 24 hours, the blended tea was removed from the mixing drum and loaded to machine hoppers for packing.

The prepared blend is then packed into Double chamber tea bags at 1.5 gr/tb weight.

### Tasting the tea products of the present invention

The above tea products were next tasted by a panel of trained tea tasters.

First, a difference test was carried out separately between Examples 1 and 2 and Comparative Examples 3 and 4 to test whether the panelists were able to pick any difference in the sample set. In both cases, the panelists were able to pick up products of Example 1 and 2 as different from comparative Examples 3 and 4.

Next, the panel scored the teas based on several sensorial attributes, including colour, clarity, taste, mouth feel and aroma. The scores given were from 0 to 7, with 0 being very low (absent) and 7 being very high (strong).

The results of the panel of trained tea tasters are presented in Table 1 below.

**Table 1 - Sensorial attributes of Examples 1 and 2 and Comparative Examples 3 and 4**

| **Sensorial Attributes** | **Average panel scoring (between 1-7)** | | | |
|---|---|---|---|---|
| | **Example 1 (Hybrid 1)** | **Example 2 (Hybrid 2)** | **Comp Example 1 (Granular only)** | **Comp Example 2 (Liquid only)** |
| Brown Color | 0 | 0 | 0 | 0 |
| Amber Color | 4 | 4 | 1 | 4 |
| Sparkle Color | 3 | 2 | 4 | 3 |
| Clarity in brew | 3 | 3 | 5 | 2 |
| Sweet Taste | 2 | 3 | 2 | 1 |
| Sour Taste | 0 | 0 | 0 | 5 |
| Smooth Feel | 3 | 4 | 3 | 3 |
| Astringent Mouthfeel | 2 | 1 | 3 | 1 |
| Sweet Floral (AF) | 4 | 4 | 2 | 1 |
| Citrus (AF) | 3 | 4 | 6 | 1 |
| Neutral (Clean) | 4 | 4 | 4 | 1 |

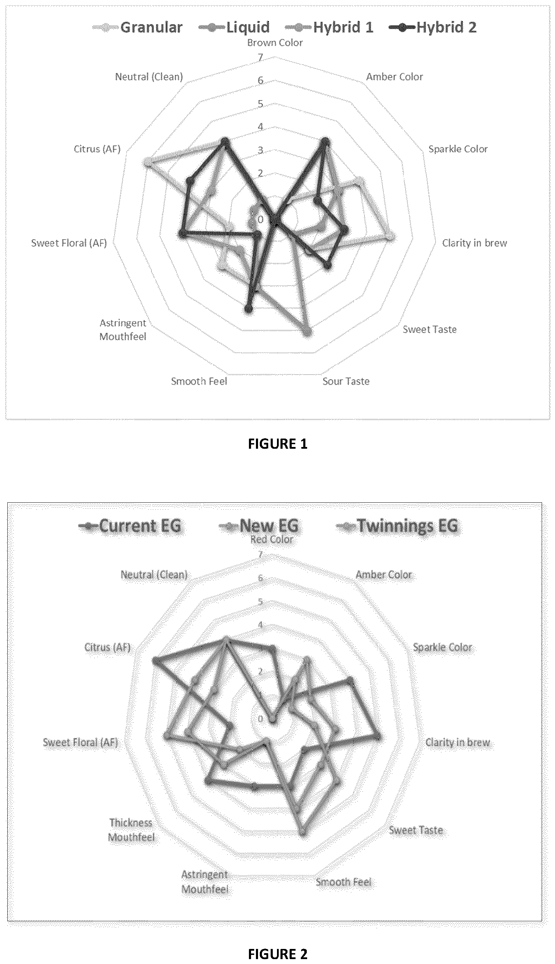

As can be seen from Table 1 and Figure 1, the flavoured tea products prepared using the process of the present invention achieved a significantly greater balance in floral and citrus flavourings, colour and overall taste compared to flavoured tea products prepared using known methodology involving using only one specific type of flavouring (i.e. granular or liquid flavouring only).

This unique and beneficial balance in flavour and aroma profile is also illustrated in Figure 1.

### Flavoured Teas of the Invention versus Comparative Known Flavoured Teas

Next studies to investigate the comparative differences between the flavoured teas of the invention compared with analogous commercially available flavoured teas were conducted.

Here, Example 1 above was used together with two commercially available flavoured black tea products:
*Control 1* = *Lipton Earl Grey*
*Control 2* = *Twinings Earl Grey*

The above tea products were then tasted by a panel of trained tea tasters.

First, a difference test was carried out separately between Example 1 and Controls 1 and 2 to test whether the panelists were able to pick any difference in the sample set. In both cases, the panelists were able to pick up products of example 1 and 2 as different from example A.

Next, the panel scored the teas based on 4 main criteria: taste intensity, flavour intensity, aroma intensity and overall balance of taste, flavour and aroma. The scores given were from 1 to 5, with 1 being low and 5 being high.

The results are presented in Table 2 below.

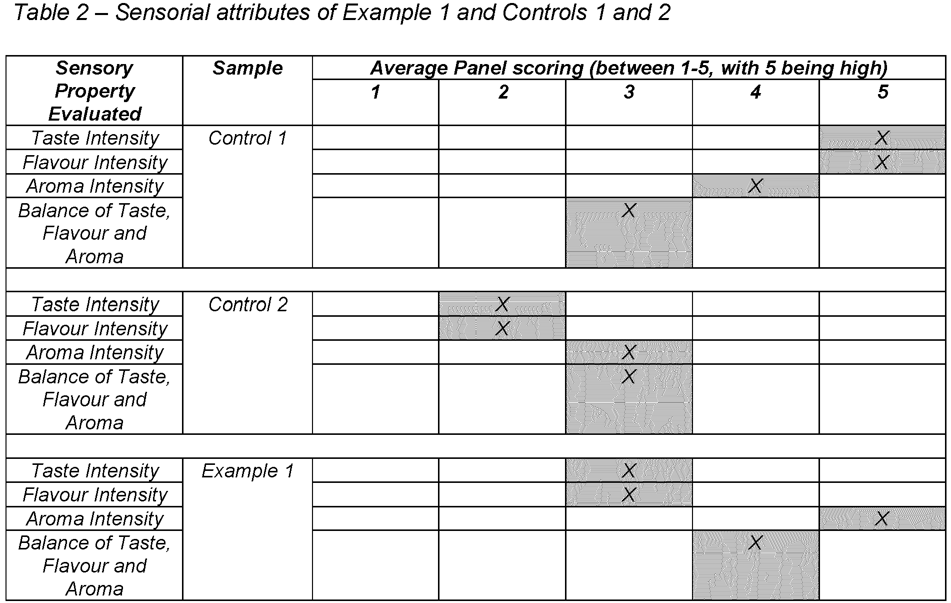

As can be seen from Table 2 above, compared to several commercially available Earl Grey blends, the flavoured tea product of the present invention achieves a much more balanced aroma and taste profile, which is neither too strongly nor too weakly flavoured.

The unique and beneficial balance in flavour and aroma profile demonstrated by the flavoured teas of the invention is also illustrated in Figure 2.

### Chemical Composition of the Flavoured Tea Compounds

The above tea products were next analysed to look for the main compounds that attribute to the floral and citrus taste and aroma of flavoured tea products (such as Earl Grey). Here, the following protocol was used:
First, 2g of the flavoured tea was brewed with 200 mL of hot water for 2 minutes, stirred once and then strained to prepare flavoured tea infusions. The infusions were cooled to room temperature and used for GC-MS analysis.

Gas chromatography - mass spectroscopy (GC-MS) was used to characterize the flavour/aroma profiles of the flavoured tea infusions as follows:

### GC-MS conditions:

Volatile compounds from tea samples were analysed using a gas chromatograph with a MS detector (Agilent 7890B). A CP-wax 52 CB (30m X 0.25mm, film thickness 0.15 µm) column was used for analysis. The injector was operated in a split less configuration with helium as the carrier gas at a constant flow rate of 1.0 mL/min. The injector was maintained at 230°C. The oven ramp was given as follows: initial temperature of 50°C held for 3 min, followed by 2°C /min to 170°C. Run time was 60 minutes. Samples were extracted at 70 °C for 30 minutes using SPME fiber. Mass scan range: 33 m/z to 500 m/z.

The peak area was calculated for the individual compounds from the GC chromatograms.

The results are summarized in Table 3 below.

**Table 3 - Relative amounts of several key compounds in the flavoured tea products as determined by GC-MS.**

| | **Compounds** | | **Control 1** | | **Control 2** | | **Example 1** | |
|---|---|---|---|---|---|---|---|---|
| | | **RT (min)** | **Area** | **%** | **Area** | **%** | **Area** | **%** |
| Citrus attributes | (-)-β-Pinene | 5.80 | 20313154 | 31 | 2239778 | 0.7 | 2039630 | 0.6 |
| | β-Myrcene | 7.18 | 3594354 | 0.6 | 8480220 | 2.7 | 11261394 | 3.1 |
| | D-Limonene | 7.83 | 174119207 | 26.8 | 29541633 | 9.5 | 61417640 | 170 |
| | γ-Terpinen | 937 | 41564827 | 6.4 | 3318211 | 11 | 5297178 | 1.5 |
| | β-Ocimene | 9.70 | 17262234 | 2.7 | 7611891 | 2.5 | 12188086 | 3.4 |
| | β-Cymene | 10.39 | 9830580 | 1.5 | 8504494 | 2.7 | 13386177 | 3.7 |
| | α-Terpinolene | 10.80 | 19502311 | 30 | 9796830 | 3.2 | 9429306 | 2.6 |
| | α-Terpineol | 32.28 | 21702825 | 3.3 | 13798587 | 4.5 | 15726421 | 4.4 |
| Floral attributes | linalool/Linalool acetate | 24.93 | 178582357 | 27.4 | 86273424 | 279 | 103807074 | 28.7 |
| | Geranyl propionate | 33.95 | 61756909 | 9.5 | 50115383 | 162 | 42025122 | 11.6 |
| | Linalyl 3-methylbutanoate | 35.66 | 102496026 | 15.8 | 89868154 | 29.0 | 84572484 | 23.4 |
| | **Total area** | | 650724785 | | 309548603 | | 361150511 | |

As can be seen from Table 3, the flavoured tea products of the present invention have a novel and unique chemical fingerprint of several key compounds associated with the citrus and floral taste/aroma of flavoured. This unique chemical composition allows for the flavoured tea products of the present invention to provide a novel and uniquely balanced flavour.

## Claims

1. A process for preparing a flavoured tea product, the process comprising:
providing a tea product; and
mixing the beverage product with one or more granular flavourings and one or more liquid flavourings.

2. A process according to claim 1, wherein after mixing with one or more liquid flavourings the beverage product is left to stand for between 2 and 48 hours at a temperature of between 10 °C and 45°C.

3. A process according to claim 1, wherein the process comprises:
a) providing a tea product;
b) mixing the tea product with one or more liquid flavourings;
c) leaving the beverage product of step b) to stand for between 2 and 48 hours at a temperature of between 10 °C and 45°C; and
d) mixing the beverage product of step c) with one or more granular flavourings.

4. A process according to any one of claims 1 to 3, wherein the tea product is a black tea product, preferably a black tea product with a moisture content of less than 10 wt.%.

5. A process according to any one of claims 1 to 4, wherein at least one of the liquid flavourings and at least one or the granular flavourings are the same type of flavouring (e.g. bergamot).

6. A process according to any one of claims 1 to 5, wherein the flavouring is selected from bergamot, rose, mint, lemon, orange, jasmine, chamomile, cardamom, masala, ginger, strawberry, apple, blackcurrant, plum, fennel, lemon verbena, lavender, passion fruit, forest fruits and vanilla.

7. A process according to any one of claims 1 to 6, wherein at least one of the granular flavourings and at least one of the liquid flavourings is bergamot.

8. A process according to any one of claims 1 to 7, wherein the amount of granular flavouring added to and mixed with the beverage product is between 1 and 10% based on the weight of the tea product.

9. A process according to any one of claims 1 to 7, wherein the amount of liquid flavouring added to and mixed with the beverage product is between 0.1 and 5% based on the weight of the tea product

10. A process according to any one of claims 1 to 9, wherein the granular flavouring has an average particle size of between 50 µm and 1000 µm, preferably between 50 µm and 500 µm.

11. A process according to any one of claims 1 to 10, wherein the process comprises:
a) providing a tea product (e.g. a black tea product);
b) mixing the tea product (e.g. a black tea product) with one or more liquid flavourings;
c) leaving the tea product (e.g. a black tea product) of step b) to stand for between between 6 and 30 hours at a temperature of between 20 °C and 35°C; and
d) mixing the tea product of step c) with one or more granular flavourings,
and wherein:
i) at least one of the liquid flavourings is bergamot and at least one or the granular flavourings is bergamot;
ii) the total amount of granular flavouring and liquid flavouring is between 1 and 10 % (e.g. between 4 and 6%) based on the weight of the tea product; and
iii) the ratio of liquid flavouring to granular flavouring added to the tea product is between 1:3 and 1:15 (e.g. between 1:10 and 1:15).

12. A flavoured tea product obtainable by the process as claimed in any one of claims 1 to 11.

13. A flavoured tea product comprising D-limonene and linalool, wherein the ratio of D-limonene to linalool is between 1:1.2 and 1:2.8.

14. A flavoured tea product according to claim 13, wherein the flavoured tea product comprises D-limonene, linalool, geranyl propionate and linalyl 3-methylbutanoate, and wherein D-limonene comprises between 15% and 30% of the total combined amount of these four compounds.

15. A flavoured tea product according to claim 13 or claim 14, wherein the flavoured tea product comprises D-limonene, linalool, geranyl propionate and linalyl 3-methylbutanoate, and wherein linalool comprises between 32% and 38% of the total combined amount of these four compounds.

16. A flavoured tea product according to any one of claims 13 to 12, wherein the flavoured tea product comprises (-)-β-Pinene, β-Myrcene, D-Limonene, γ-Terpinen, β-Ocimene, β-Cymene, α-Terpinolene, α-Terpineol, linalool/Linalool acetate, Geranyl propionate and Linalyl 3-methylbutanoate, and linalool, Geranyl propionate and Linalyl 3-methylbutanoate represent between 55 and 70% (preferably between 60 and 65%) of the total combined amount of these compounds in the flavoured tea product.

17. A flavoured tea product according to any one of claims 13 to 16, wherein the flavoured tea product comprises (-)-β-Pinene, β-Myrcene, D-Limonene, γ-Terpinen, β-Ocimene, β-Cymene, α-Terpinolene, α-Terpineol, linalool/Linalool acetate, Geranyl propionate and Linalyl 3-methylbutanoate, and the relative amounts of these compounds are as defined in Table 3.
